(19) Europäisches Patentamt
European Patent Office
Office européen des brevets

(11) Veröffentlichungsnummer: **0 359 185 B1**

(12) **EUROPÄISCHE PATENTSCHRIFT**

(45) Veröffentlichungstag der Patentschrift: **08.06.94**

(21) Anmeldenummer: **89116822.1**

(22) Anmeldetag: **12.09.89**

(51) Int. Cl.5: **C08L 33/10**, C08L 53/00, //(C08L33/10,53:00),(C08L53/00, 33:10)

# (54) Verträgliche Polymermischungen (II).

(30) Priorität: **16.09.88 DE 3831499**

(43) Veröffentlichungstag der Anmeldung: **21.03.90 Patentblatt 90/12**

(45) Bekanntmachung des Hinweises auf die Patenterteilung: **08.06.94 Patentblatt 94/23**

(84) Benannte Vertragsstaaten: **AT BE CH DE ES FR GB IT LI NL SE**

(56) Entgegenhaltungen: **DE-A- 1 929 502**

(73) Patentinhaber: **RÖHM GMBH**
**Kirschenallee**
**D-64293 Darmstadt(DE)**

(72) Erfinder: **Siol, Werner, Dr.**
**Goerdelerweg 34**
**D-6100 Darmstadt-Eberstadt(DE)**
Erfinder: **Terbrack, Ulrich**
**Berliner Strasse 3**
**D-6107 Reinheim 2(DE)**

EP 0 359 185 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Stand der Technik

Bei der Mischung von Hochpolymeren kann man mit einiger Wahrscheinlichkeit erwarten, daß sie sich als unverträglich erweisen (vgl. Kirk-Othmer 3rd. Ed. Vol. 18, pp. 443 - 478, J. Wiley 1982). Polystyrol und Polyalkylmethacrylate können für alle praktischen Zwecke als Beispiele für unverträgliche Polymere gelten. So wird von M.T. Shaw et al. eine Mischbarkeit von nur 3,4 ppm Polymethylmethacrylat (PMMA, Molekulargewicht 160 000) mit Polystyrol angegeben (vgl. Chem. Abstr. 101, 73 517 3). Sogar sehr niedermolekulares Polystyrol ist mit PMMA sehr wenig verträglich (R.R. Parent et al., J. Polym. Sci, Polymer Physics Ed. 16, 1829 (1987). Andere Polyalkylmethacrylate sind ebenfalls mit Polystyrol unverträglich. Ausnahmen scheinen lediglich Mischungen aus Polystyrol und Polycyclohexylacrylat und Polycyclohexylmethacrylat zu bilden (vgl. DE-A 36 32 369). Während also das Homopolymere des Styrols mit der großen Mehrheit der Polyalkylmethacrylate unverträglich ist, gilt diese Unverträglichkeit nicht für Copolymere aus Styrol und Acrylnitril. So hat man bei bestimmten Styrol-Acrylnitrilcopolymeren Verträglichkeit mit PMMA festgestellt [vgl. J.W. Barlow et al. Polymer 28, 1177 (1987)]. Da diese Verträglichkeit aber offenbar nur bei ganz speziellen Copolymer-Zusammensetzungen der Styrol-Acrylnitrilkomponente gefunden wird, spricht man anschaulich von "Mischbarkeitsfenstern". In solchen Fällen kann die Mischbarkeit der speziellen Styrol-Acrylnitril-Copolymeren mit PMMA auf erhebliche Abstoßungskräfte zwischen der Styrol- und der Acrylnitrileinheit im Copolymer zurückgeführt werden.

Ähnliche Verhältnisse dürften bei Styrol-Maleinsäureanhydrid-Copolymeren vorliegen, die ebenfalls bei bestimmten Styrol-Maleinsäureanhydrid-Verhältnissen mit PMMA verträglich sind. In diese Reihe PMMA-verträglicher Styrolcopolymerer gehören wahrscheinlich auch die Copolymeren aus Styrol und Allylalkohol sowie die Copolymeren aus Styrol und p(2-Hydroxyhexafluoroisopropyl)styrol, deren PMMA-Verträglichkeit allerdings auch durch Wasserstoffbrückenbindung der Hydroxylgruppe mit der PMMA-Estergruppe gedeutet wurde [B.Y.Min and Eli M. Pearce, Organic Coatings and Plastic Chemistry, 45, 58 - 64 (1981), F. Cangelori and M.T. Shaw, Polymer Preprints (Am. Chem. Soc., Div. Polym. Chem.) 24, (1983), 258 - 259].

Obwohl die Verträglichkeit von PMMA mit Copolymeren aus Styrol und stark polaren Monomeren wie Acrylnitril, Maleinsäureanhydrid, Allylalkohol und p-(2-Hydroxyhexafluoroisopropyl)styrol also bereits seit Jahren bekannt war, wurden diese verträglichen Polymermischungen doch stets als Ausnahmeerscheinung in der großen Fülle der unverträglichen Polystyrol/Polyalkylmethacrylat-Mischungen angesehen. Dies ist um so verständlicher, als in aller Regel die Verträglichkeit dieser Styrolcopolymeren auf PMMA als Mischungspartner beschränkt war. Ebenso galten lange Zeit Polyalkylmethacrylat und Polyalkylacrylate als miteinander unverträglich. Wie jedoch in der deutschen Patentanmeldung DE-A-3 708 427 vom 16.03.1987 gezeigt wird, sind unter gewissen Voraussetzungen Polyalkylmethacrylate und Polyalkylacrylate miteinander verträglich. Voraussetzungen für gute Verträglichkeit sind gemäß DE-A-3 708 427

a) vergleichbare Van der Waals-Volumina der Alkylreste von Polymethacrylat und Polyacrylat und

b) sterisch anspruchsvolle, räumlich festgelegte, große Alkylreste (5 - 40 Kohlenstoffatome).

Als Beispiel für in jedem Verhältnis auch bei Raumtemperatur verträgliche Mischungen werden Polycyclohexylacrylat/Polycylohexylmethacrylat sowie Poly-3,3,5-trimethylcyclohexylacrylat/Poly-3,3,5-trimethylcyclohexylmethacrylat genannt.

Sofern die Kohlenstoffzahl der Alkylreste von Polyacrylat und Polymethacrylat übereinstimmen, wird auch bei kurzkettigen Alkylresten Verträglichkeit bei hohen Temperaturen gefunden. So wird für das System Polyethylacrylat/Polyethylmethacrylat vollständige Mischbarkeit bei Temperaturen oberhalb von 190 Grad C gefunden, dasselbe gilt für das System Polybutylacrylat/Polybutylmethacrylat (vergl. Ausbildungen 3 und 4 der Patentanmeldung DE-A-3 708 427). Derartige Polyalkylacrylat/Polyalkylmethacrylatmischungen zeigen also eine obere kritische Lösungstemperatur (UCST = Upper Critical Solution Temperature).

Mechanische Abmischungen von Polymeren haben in bestimmten Fällen und auf bestimmten Gebieten der Kunststoffindustrie zu eigenschaftsmäßig verbesserten Produkten geführt und zum Teil die Skala der Einsatzmöglichkeiten beträchtlich erweitert (vgl. Kirk-Othmer loc.cit. Vol. 18). Die physikalischen Eigenschaften solcher "Polyblends" stellen gewöhnlich einen Kompromiß dar, der in den günstigen Fällen eine Verbesserung bedeuten kann verglichen mit den Eigenschaften der individuellen Polymeren. Die technischen Einsatzmöglichkeiten nicht-verträglicher (multiphasiger) Polymermischungen sind dabei oft besser beurteilt worden als die der verträglichen Mischungen (vgl. Kirk-Othmer loc.cit. pg. 449).

Aufgabe und Lösung

Verträgliche Polymermischungen mit günstigen mechanischen Eigenschaften können insbesondere aufgrund ihrer zu erwartenden guten optischen Eingenschaften auf das Interesse der Technik rechnen. Andererseits bestand bei Berücksichtigung des geschilderten Standes der Technik wenig Aussicht, auf der Basis von Styrol(co)-Polymerisaten einerseits und Polyalkyl(meth)acrylaten andererseits als Mischungskomponenten zu technisch interessanten **verträglichen** Polymermischungen zu gelangen, insbesondere zu solchen Polymermischungen, die bei Raumtemperatur in jedem Mischungsverhältnis verträglich sind.
Es wurde nun gefunden, daß überraschenderweise auch Styrol-Acrylsäureester-Copolymere mit Polyalkylmethacrylaten sehr gut verträgliche Polymermischungen bilden, wenn bestimmte, klar definierbare Randbedingungen eingehalten werden.
Die vorliegende Erfindung betrifft daher verträgliche Polymermischungen PM aus zwei verschiedenen Polymerkomponenten

A) 1 bis 99 Gew.-%, vorzugsweise 5 bis 95 Gew.-%, insbesondere 25 - 75 Gew.-% eines Copolymeren, aufgebaut aus den Monomeren

a) 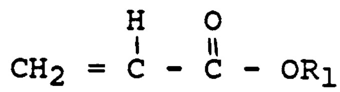 und

b) 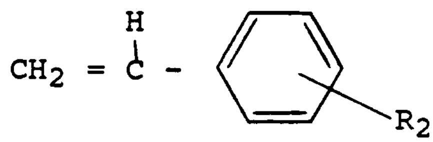

unter Bildung eines Polymerisats der Formel I

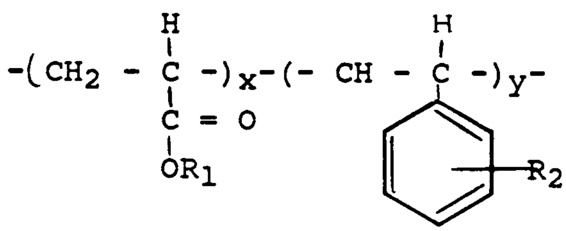 (I)

und

B) 99 - 1 Gew.-%, vorzugsweise 95 bis 5 Gew.-%, insbesondere 75 bis 25 Gew.-% eines Polyalkylmethacrylats aufgebaut aus einem oder mehreren Monomeren der Formel

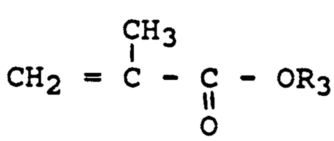

mit der Maßgabe, daß

- $R_1$ für einen aliphatischen Kohlenwasserstoffrest mit 1 - 4 Kohlenstoffatomen,
- $R_2$ für Wasserstoff oder Methyl, vorzugsweise für Wasserstoff
- $R_3$ für einen nichtcyclischen aliphatischen Kohlenwasserstoffrest mit 2 bis 8 Kohlenstoffatomen steht und

worin

- X 10 bis 90 Gew.-%, vorzugsweise 20 bis 80 Gew.-%, insbesondere 60 - 40 Gew.-% bezogen auf das Polymerisat der Formel I ausmacht, und
- Y 90 bis 10 Gew.-%, vorzugweise 80 bis 20, insbesondere 60 - 40 Gew.-%, bezogen auf das Polymerisat der Formel I ausmacht.

Für bestimmte Anwendungen, insbesondere wenn Verträglichkeit vor allem bei tiefen Temperaturen erwünscht ist, dagegen bei hohen Temperaturen fehlen kann (Polymermischungen mit LCST-Verhalten) ist

ein X-Anteil <60 Gew.-% von Vorteil, entsprechend beträgt der Y-Anteil >40 Gew.-%.

Die Charakterisierung der erfindungsgemäßen Polymermischungen PM als verträgliche Mischungen erfolgt nach den anerkannten Kriterien (vgl. Kirk-Othmer, loc,cit, Vol. 18, pp. 457 -460, Brandrup-Immergut Polymer Handbook, 2nd Ed. III-211, J. Wiley 1975).

a) Bei Anwendung optischer Verfahren beobachtet man bei den erfindungsgemäßen Polymermischungen PM einen einzigen Brechungsindex, der zwischen denen der beiden Polymerkomponenten A) und B) liegt.

b) Die Polymermischungen PM besitzen eine einzige Glasübertragungstemperatur Tg (die zwischen der der Polymerkomponente liegt).

Als ein anderer Test auf die Mischbarkeit von Polymeren wird das Auftreten der **Lower Critical Solution Temperature (LCST)** herangezogen. Die Existenz der LCST beruht auf dem Vorgang, daß sich beim Erwärmen die bis anhin klare Mischung in Phasen auftrennt und optisch trübe wird. Dieses Verhalten stellt einen eindeutigen Beweis dafür dar, daß die ursprüngliche Polymermischung aus einer einzigen, im Gleichgewicht befindlichen homogenen Phase bestand (vgl. DE-A 34 36 476 bzw. US-A 4 722 595). Ferner können Polymermischungen das Phänomen der **Upper Critical Solution Temperature** (UCST) zeigen: Umgekehrt wie beim Vorliegen der LCST zeigen solche Polymermischungen bei erhöhter Temperatur Verträglichkeit (Einphasigkeit), bei niederer Temperatur Unverträglichkeit (Phasentrennung) (vgl. O.Olabisi, L.M. Robeson, M.T. Shaw, Polymer-Polymer-Miscibility, Academic Press 1979; Kirk-Othmer, loc.cit pp 457-460).

In bevorzugtem Fall wird jedoch bei den erfindungsgemäßen Polymermischungen das Phänomen der LCST beobachtet. Bevorzugt sind demnach solche erfindungsgmäßen Polymermischungen, die bei Raumtemperatur verträglich sind. Ganz besonders bevorzugt sind solche Polymermischungen, die im Bereich 0 Grad C bis 260 Grad C verträglich sind, also in diesem Temperaturbereich keine Entmischung zeigen. Es ist besonders hervorzuheben, daß die vorliegende Erfindung für bestimmte Styrol/Acrylsäureesterverhältnisse Styrol-Acrylsäureester-Copolymer/Polyalkylmethacrylatmischungen bereitstellt, die so hervorragende Verträglichkeit aufweisen, daß sie bei jedweder Temperatur und bei jedwedem Mischungsverhältnis völlig verträglich sind, d.h. bei allen Temperaturen und allen Mischungsverhältnissen einen einzigen Brechungsindex und eine einzige Glastemperatur aufweisen.

Vorzugsweise macht die Summe der Polymerkomponenten A) plus B) einhundert Prozent der gesamten Polymeren in der Mischung PM aus, wobei die Polymermischung PM jedoch im weiteren unter Umständen anstelle eines einheitlichen Polymeren eingesetzt, d.h. in Kombination mit weiteren Polymeren verarbeitet werden kann.

Die Polymerkomponente A)

Bei der Polymerkomponente A) handelt es sich um ein Mischpolymerisat, dessen Aufbau schematisch durch die Formel I wiedergegeben werden soll. Die Herstellung derartiger Misch- bzw. Blockcopolymerisate ist an sich bekannt (vgl. "Herstellung der Polymerisate") Besonders genannt seien Copolymerisate mit den Monomeren n-Butylacrylat, n-Propylacrylat, Ethylacrylat, Methylacrylat als Komponente a) einerseits und mit Styrol als Komponente b) andererseits, wobei die Monomeranteile in den durch x und y charakterisierten Verhältnissen stehen. p-Methylstyrol bzw. m-Methylstyrol sind weniger bevorzugt. Geringste Bedeutung hat o-Methylstyrol. Besonders interessant ist Styrol selbst als Comonomerbaustein.

Als Beispiele seien Butylacrylat-Styrol-Copolymere im Verhältnis Butylacrylat/Styrol 40 : 60 und 80 : 20 und in dazwischenliegenden Verhältnissen besonders genannt, bzw. Ethylacrylat-Styrol-Copolymere im Verhältnis 70 : 30 bis etwa 20 : 80 bzw. Methylacrylat-Styrol-Copolymere im Verhältnis 50 : 50 bis etwa 20 : 80. Die angegebenen Verhältnisse repräsentieren jeweils die Gewichtsprozente der Monomeren in Copolymeren. Generell kann festgestellt werden, daß für eine gute Verträglichkeit bei Raumtemperatur der Styrolanteil in der Regel einen gewissen Mindestanteil aufweisen muß, so bevorzugt > 40 Gew.-%. Dies gilt inbesondere für Copolymere aus Methylacrylat und Styrol bzw. für Copolymere aus Ethylacrylat und Styrol. Hier ist ein Styrolanteil > 45 Gew.-% bevorzugt.

In einer bevorzugten Ausführungsform besteht die Polymerkomponente A) ausschließlich aus den in Formel I angegebenen zwei Monomerbausteinen Styrol und Acrylsäureester. Daneben kann das Polymere der Formel I durch weitere, mit Styrol und Acrylsäureestern copolymerisierbare Monomere in geringen Anteilen, z.B. von 0,5 bis < 10 Gew.-% modifiziert werden; dies sind z.B. in Anteilen < 5 Gew.-%, bevorzugt < 2,5 Gew.-% besonders bevorzugt < 1 Gew.-% Acrylsäure, Methacrylsäure, Acryl-und Methacrylamide, z.B. Acrylamid selbst oder Methylolmethacrylamid. In Anteilen < 10 Gew.-%, bevorzugt < 6 Gew.-%, besonders bevorzugt < 4 Gew.-% sind zu nennen: Aminoalkyl(meth)acrylate oder -methacrylamide, Hydroxyalkyl(meth)acrylate oder -(meth)acrylamide. Hier sind beispielsweise Hydroxethylacrylat, N,N-Dimethylaminoethylacrylat zu nennen. In der Regel dienen diese Comonomerbausteine, in kleinen Anteilen eingesetzt, der Haftung der Polymeren bzw. der Polymermischung auf einem Untergrund, bzw. der Pigmentstabilisierung etc. Während die Polymerkomponente A) demzufolge in geringen Anteilen weitere Comonomere wie (Meth)acrylsäure, -amide sowie Aminoalkyl- und Hydroxyalkyl(meth)acrylate zur Funktionalisierung enthalten kann, sind Acrylnitril, Maleinsäureanhydrid, Allylalkohol und Hydroxylhexafluoroisopropylstyrol nur zu einem Anteil < 3 Gew.-%, bevorzugt < 1 Gew.-%, besonders bevorzugt überhaupt nicht in der Polymerkomponente A enthalten.

Die Polymerkomponente B

Die Polymerkomponente B stellt ein Polymerisat, vorzugsweise ein Homopolymerisat aus den Methacrylsäureestern der Formel II dar. $R_3$ steht vorzugsweise für n-Butyl, Isobutyl, Propyl, Ethyl, Hexyl, Amyl. Damit sind sowohl für $R_1$ als auch für $R_3$ kurzkettige Alkylreste bevorzugt. Voluminöse, sterisch fixierte cyclische Kohlenwasserstoffe als Reste $R_1$ und $R_3$ genügen nicht der technischen Regel der vorliegenden Erfindung. Erfindungsgemäß umfaßt $R_1$ Alkylreste mit 1 - 4 Kohlenstoffatomen, $R_3$ Alkylreste mit 2 - 8 Kohlenstoffatomen. Dabei handelt es sich bei $R_3$ um lineare oder verzweigte Alkylreste; cyclische Alkylreste sind nicht Teil der Erfindung.
Ganz besonders bevorzugt ist der Fall, daß $R_1$ im Acrylsäureester a) der Komponente A) und $R_3$ im Methacrylsäureester der Komponente B) identisch sind. Sofern $R_3$ ungleich $R_1$ ist, ist bevorzugt, wenn der Rest $R_3$ bezüglich der Zahl seiner Kohlenstoffatome um nicht mehr als 3 Kohlenstoffatome von der Zahl der Kohlenstoffatome in $R_1$ abweicht. Besonders bevorzugt ist der Fall, daß $R_3$ und $R_1$ um nicht mehr als 2 Kohlenstoffatome voneinander abweichen.

Bevorzugt macht der Methacrylsäureester der Formel II mehr als 80 Gew.-%, besonders bevorzugt mehr als 90 Gew.-% der Polymerkomponente B) aus. Als Comonomere in Anteilen < 20 Gew.-%, bevorzugt < 10 Gew.-% kommen in Frage: mit dem Monomeren der Formel II copolymerisierbare Vinylverbindungen, so z.B. von der Hauptkomponente unterscheidbare Ester der Methacrylsäure, Acrylsäureester, sowie in geringen Anteilen, meist von 1 bis < 5 Gew.-%, Acrylsäure, Methacrylsäure, (Meth)acrylsäureamide, Hydroxyalkyl- und Aminoalkylester und -amide der (Meth)acrylsäure. Besonders interessant sind somit Polymermischungen PM bestehend aus:
A) Butylacrylat-Styrol-Copolymeren und
B) Poly-n-butylmethacrylat ( = PM1) ferner aus
A) Butylacrylat-Styrol-Copolymeren und
B) Polyisobutylmethacrylat ( = PM2)
A) Butylacrylat-Styrol-Copolymeren und
B) Poly-n-Propylmethacrylat ( = PM3)
A) Butylacrylat-Styrol-Copolymeren und
B) Poly-n-Hexylmethacrylat ( = PM4)
A) Polyethylacrylat-Styrol-Copolymeren und
B) Polyethylmethacrylat ( = PM5)
A) Polymethylacrylat-Styrol-Copolymeren und
B) Polyethylmethacrylat ( = PM6)
Für alle diese Polymermischungen existieren Acrylat-Styrol-Copolymerzusammensetzungen (siehe Beispiele), bei denen diese Polymermischungen unabhängig, von der Zusammensetzung und bei jeder sinnvollen experimentell zugänglichen Temperatur (d.H. Raumtemperatur bis 260 Grad C) völlig verträglich sind.

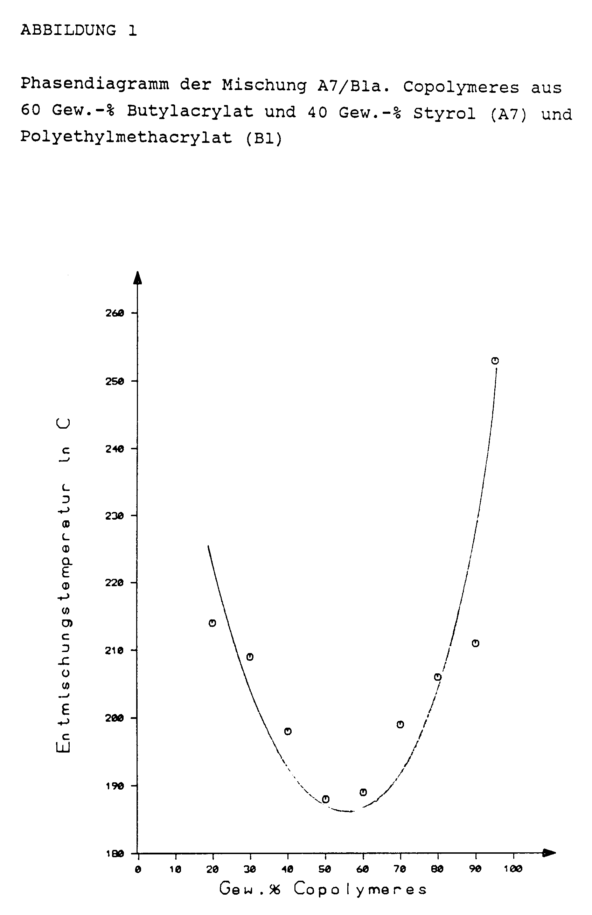

Interessant sind auch Polymermischungen aus Butylacrylat-Styrol-Copolymeren und Poly-n-butylmethacrylat. Daneben sind auch solche Polymermischungen von Interesse, die eine LCST aufweisen, so z.B. das System Butylacrylat-Styrol-Copolymere mit > 40 Gew.-% Styrol als Komponente A) und Polyethylmethacrylat als Komponente B) (siehe Abb. 1).

Herstellung der Polymermisate A) und B)

Die Herstellung der Polymerisate A) und B) kann nach den bekannten Regeln der Polymerisation und nach bekannten Verfahren erfolgen. Die Polymeren vom Typ A) können z.B. nach Houben-Weyl. Methoden der Organischen Chemie, 4. Auflage, Bd. XIV/1, pp. 761 - 841, Georg Thieme-Verlag (1961) hergestellt werden. Dabei kann vorzugsweise das radikalische, aber auch ionische Polymerisationsverfahren zur Anwendung kommen. Die Molgewichte M der erfindungsgemäß eingesetzten Polymeren A) liegen in der Regel oberhalb von 3 000, bevorzugt im Bereich von 5 000 - 1 000 000, besonders bevorzugt im Bereich 20 000 - 500 000 (Bestimmung durch Lichtstreuung). Die Herstellung der Homo- bzw. Copolymerisate B)

erfolgt nach bekannten Verfahren (vgl. H. Rauch-Puntigam, Th. Völker Acryl- und Methacrylverbindungen, Springerverlag 1967). Wenn auch prinzipiell eine Herstellung durch anionische Polymerisation der Group-Transfer-Polymerisation [siehe auch O.W. Webster et al, J. Am. Chem. Soc., 105, 5706 (1983)] möglich ist, so ist doch die bevorzugte Herstellungsform die radikalische Polymerisation. Die Polymerisation kann in Masse, in Suspension, in Emulsion oder in Lösung erfolgen. Bei der radikalischen Polymerisation finden vorzugsweise die üblichen radikalischen Initiatoren, beispielsweise peroxidische, insbesondere organische Peroxidverbindungen wie Dibenzoylperoxid oder Dilauroylperoxid, oder Azoverbindungen wie Azodiisobutyronitril oder gegebenenfalls Redoxinitiatoren in Mengen von gewöhnlich ca. 0,01 bis 2 Gew.-% (bezogen auf die Monomeren) Anwendung.
Die Startradikale können jedoch auch durch energiereiche Strahlung erzeugt werden. Als Regler können gegebenenfalls die üblichen Schwefelregler, insbesondere Mercaptoverbindungen eingesetzt werden.
Die Molekulargewichte der Polymerisate scheinen nach den vorliegenden Beobachtungen keinen eindeutig limitierenden Einfluß auf die Vertraglichkeit auszuüben (wobei aber auch hier die schon früher aufgestellte Regel Gültigkeit haben dürfte, daß mit steigendem Molekulargewicht der Polymeren die Verträglichkeit mit fremden Polymeren tendenziell abnimmt).
Die Molgewichte M der Polymerisate B) liegen in der Regel oberhalb von 3 000, im allgemeinen im Bereich von 10 000 bis 1 000 000, vorzugsweise 20 000 bis 300 000 (Lichtstreuung). Bei der Auswahl der Monomerkomponenten, die als Comonomere bei B) eingesetzt werden sollen, ist darauf zu achten, daß die Glastemperatur Tg des resultierenden Polymerisats die technische Anwendbarkeit des Gesamtsystems PM nicht einschränkend beeinflußt. So soll für die Herstellung von Formkörpern aus der Polymermischung PM wenigstens eines der Polymeren P1 und P2 eine Glastemperatur Tg > 70 Grad C aufweisen, bevorzugt ist für diese Anwendung, daß auch die Polymermischung PM eine Glastemperatur Tg > 70 Grad C aufweist. (Zur bestimmung der Tg vgl. D. R. Paul, S. Newman, Polymer Blends Vol. 1, Chapter 5, Academic Press, New York 1978; Die Abschätzung der Tg aus den Monomeren kann anhand von Vieweg-Esser, Kunststoff-Handbuch, Band IX, pp. 333 - 340, Carl Hanser-Verlag 1975 vorgenommen werden). Diese Einschränkung gilt bevorzugt für die Herstellung von spritzgegossenen, gepreßten bzw. extrudierten Gegenständen aus der Polymermischung PM. Für andere Anwendungsgebiete, beispielsweise für Lacke, für Elastomere oder für eine reversible thermotrope Verglasung (Polymermischung mit Trübungspunkt beim Erwärmen) also für eine Anwendung gemäß DE-A 34 36 477 sind jedoch solche Polymermischungen PM bevorzugt, die eine Polymerkomponente P2 mit einer Glastemperatur Tg < 40 Grad C oder bevorzugt < 20 Grad C aufweisen.

Herstellung der Mischungen PM

Die verträglichen Mischungen PM können durch die unterschiedlichen Verfahren hergestellt werden. Sie werden z.B. durch intensives mechanisches Vermischen der Komponenten A) und B) in der Schmelze, im Extruder usw. erzeugt, oder sie können auch aus einem gemeinsamen Lösungsmittel heraus als sogenannte "solution cast polyblends" hergestellt werden (vgl. Kirk-Othmer "Encyclopedia of Chemical Technology" 3rd. Ed. Vol. 18, pg. 442 - 478 J. Wiley 1982). Auch kann so vorgegangen werden, daß Polymer A) in der Monomermischung des anderen Polymeren B) aufgelöst wird und anschließend in Gegenwart von Polymer A) erzeugt wird. Umgekehrt kann natürlich auch Polymer A) in Gegenwart des Polymeren B) erzeugt werden. Ebenso kann die Polymermischung PM aus gemeinsamen Fällungsmitteln erzeugt werden. Der Mischungsart sind keine Grenzen gesetzt. Man erzeugt in der Regel zunächst Mischungen der Komponenten A) und B), wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß die Phasengrenzen aufgehoben werden (vgl. Ullmanns Encyklopädie der Technischen Chemie, 4.Auflage, Bd. 2, pg 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen, z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter). Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymermischungen PM ist das Abmischen von Polymerdispersionen (enthaltend Polymerkomponenten A) und Polymerdispersionen, enthaltend die Polymerkomponente B). Diese Dispersionsmischungen konnen gemeinsam koaguliert werden, gemeinsam sprühgetrocknet werden oder gemeinsam auf einem Extruder abgequetscht werden. Andererseits können die Dispersionsmischungen auch gemeinsam zu einem Film aufgetrocknet werden.

Vorteilhafte Wirkungen der Mischungen PM

Ein Vorteil der erfindungsgemäßen Polymermischungen liegt bereits darin, daß sie - im Unterschied zu Mischungen aus anderen Poly(meth)acrylaten und Polystyrolen - verträglich sind. D.h. die erfindungsgemäßen Polymermischungen sind in nicht pigmentiertem Zustand im Unterschied zu nichtverträglichen Polystyrol/Poly(meth)acrylatabmischungen glasklar (sie zeigen keine Lichtstreuung, d.h. in der Regel ist der Haze < 10 %). Erfindungsgemäß sind aber auch solche Mischungen, die LCST bzw. UCST zeigen. Von besonderem Interesse sind diejenigen Polymermischungen, die bei Raumtemperatur verträglich sind.
Interesse finden auch Polymerkompositionen, die zu ca. 40 - 99 Gew.-%, bevorzugt 70 - 95 Gew.-% aus der Polymermischung PM und zu 60 - 1 Gew.-%, bevorzugt 30 - 5 Gew.-% aus einem weiteren von A) und B) chemisch unterscheidbaren Polymeren P bestehen, wobei gilt, daß Polymer P mit Polymer A), B) und mit der Mischung PM unverträglich ist.
In der Regel wird dabei die Zusammensetzung der Polymermischung PM so gewählt, daß der Brechungsindex des Polymeren P mit dem Brechungsindex der Mischung PM übereinstimmt. In der Regel soll also bei Raumtemperatur gelten:

$$|n_D^{25}{}_{PM} - n_D^{25}{}_{P}| < 0,01$$

In der Regel wird das mit PM unverträgliche Polymere P eine Tg < 20 Grad C aufweisen und wenigstens teilweise mit wenigstens einem der Bestandteile der Polymermischung PM, also mit A) oder B), kovalent verknüpft sein. Darüber hinaus kann das Polymere P vernetzt sein.
Ganz besonders bevorzugt ist der Fall, daß das Polymere P Polybutadien oder Polyisopren ist.

Polymerkompositionen, aufgebaut aus 40 - 99 Gew.-% PM und 1 - 60 Gew.-% P zeichnen sich, insbesondere wenn P eine Tg < 20 Grad C aufweist, durch eine im Vergleich zu reinem PM verbesserte Schlagzähigkeit aus.

Durch Umhüllung von Polymer A) mit Polymer B) ist die Herstellung einer optischen Gradientenfaser möglich:
Die erfindungsgemäßen verträglichen Polymermischungen aus Styrol-Acrylsäureester-Copolymeren und aus Polyalkylmethacrylaten eignen sich in besonderem Maße zum Einsatz im Lacksektor. Dies beruht vor allem darauf, daß diese Mischungen bereits bei Raumtemperatur und zum Teil sogar bei 0 Grad C oder -20 Grad C glasklar verträglich sind.
Dabei können die Polymerkomponenten A) und B) z.B. gemeinsam aus Lösung appliziert werten. Ebenso können Polyxerdispersionen gemeinsam zu Filmen aufgetrocknet werden.
Durch Variation des Mischungsverhältnisses Polymerkomponente A) zu Polymerkomponente B) läßt sich die Polymermischung nach Wunsch in vielen physikalischen Eigenschaften verändern, so z.B. im Brechungsindex, in der Härte, und in der Glastemperatur.
Von besonderem Interesse sind auch Lackierungen, in denen Polymerkomponente B), gegebenenfalls mit (einpolymerisiertem) UV-Absorber die äußere Hülle eines Gegenstands ausmacht, der in einer darunterliegenden Schicht bzw. als ganzes Polymerkomponente A) enthält. Besonders bei Mehrfachlackierungen mit Polymerkomponente B) als Schlußlack, kommt es zwischen Decklack B und darunterliegender Schicht A, in der dazwischenliegenden Zone zur Ausbildung einer verträglichen Mischung, bestehend aus Polymerkomponente A) und Polymerkomponente B).

Die folgenden Beispiele dienen zur Erläuterung der Erfindung.

Die Bestimmung der VICAT-Erweichungstemperatur erfolgt nach DIN 53 460.
Die Bestimmung der Viskositätszahl J (ml/g) in Anlehnung an DIN 51 562, Teil 2 und Teile 3 und DIN 7745, Teil 2. Die Bestimmung der Lichtdurchlässigkeit kann - sofern nicht anders vermerkt - nach DIN 5036 vorgenommen werden. Die Trubung (haze) wird in % (ASTM D 1003) angegeben.

BEISPIELE

Beispiel 1

Herstellung des Copolymeren A1)

Eine Mischung aus 74,35 g Methylacrylat, 25 g Styrol, 0,5 g t-Dodecylmercaptan, 0,15 g Azoisobutyronitril wird unter Ausschluß von Luft in einem Beutel (® Hostaphan der Fa. Hoechst) 16 h bei 50 Grad C polymerisiert. Danach wird das Polymere in Methanol ausgefällt und getrocknet. Da das Polymere nicht bis zum vollständigen Umsatz polymerisiert wurde, wurde die Zusammensetzung des Polymeren A1) analytisch

bestimmt.
Das so hergestellte Copolymere A) hat danach die Zusammensetzung: 53 Gew.-% Methylacrylat, 47 Gew.-% Styrol. J = 47 ml/g.

Beispiel 2

Herstellung des Copolymeren A2)

Man wählt dasselbe Polymerisationsverfahren wie in Beispiel 3, wählt jedoch andere Einwaagen:
50,0 g Methylacrylat
50,0 g Styrol
0,5 g t-Dodecylmercaptan
0,15 g Azoisobutyronitril
Auch hier wird das Polymere ausgefällt und analysiert.
Zusammensetzung des Copolymeren A2):
36 Gew.-% Methylacrylat
64 Gew.-% Styrol
J = 37 ml/g

Beispiel 3

Herstellung des Copolymeren A3)

Man verfährt wie in den Beispielen 3 und 4.
Einwaage:
75,0 g Styrol
25,0 g Methylacrylat
0,5 g t-Dodecylmercaptan
0,15 g Azoisobutyronitril
Analyse nach Aufarbeitung:
Zusammensetzung des Copolymeren A3)
23 Gew.-% Methylacrylat
77 Gew-% Styrol
J = 27 ml/g

Beispiele 4 - 6

Man verfährt wie in den Beispielen 1 - 3, wählt jedoch als Monomerenzusammensetzung Styrol und Ethylacrylat. Die Herstellung erfolgt also jeweils mit 0,5 g t-Dodecylmercaptan und 0,15 g Azoisobutyronitril.

Beispiel 4

| | |
|---|---|
| Einwaagen: | 75 g Ethylacrylat<br>25 g Styrol |

Ergebnis der Analyse:
Zusammensetzung der Copolymeren A4):
45 Gew.-% Styrol
55 Gew.-% Ethylacrylat
J = 47 ml/g

Beispiel 5

| Einwaagen: | 50 g Ethylacrylat<br>50 g Styrol |
|---|---|

Ergebnis der Analyse:
Zusammensetzung des Copolymeren A5):
62 Gew.-% Styrol
38 Gew.-% Ethylacrylat
J = 32 ml/g

Beispiel 6

| Einwaagen: | 25 g Ethylacrylat<br>75 g Styrol |
|---|---|

Ergebnis der Analyse:
Zusammensetzung des Copolymeren A6):
78 Gew.-% Styrol
22 Gew.-% Ethylacrylat
J = 28 ml/g

Beispiele 7 und 8

In einem kontinuierlich betriebenen Druckreaktor werden bei ca. 150 Grad C kontinuierlich ein Monomergemisch aus Styrol und Butylacrylat sowie 0,2 Gew.-% Dodecylmercaptan als Regler und 0,12 Gew.-% t-Butylperoctanoat als Initiator (Angaben jeweils bezogen auf die Monomerenmischung) zudosiert, bis ca. 50 % Umsatz polymerisiert und anschließend entgast.

Man erhalt je nach Monomerzusammensetzung folgende Produkte:

Beispiel 7

Ergebnis der Analyse:
Zusammensetzung des Copolymeren A7):
40 Gew.-% Styrol
60 Gew.-% Butylacrylat
J = 60 ml/g

Beispiel 8

Ergebnis der Analyse:
Zusammensetzung des Copolymeren A8):
25 Gew.-% Styrol
75 Gew.-% Butylacrylat
J = 54 ml/g

Beispiel 9

Herstellung des Polymeren B1) durch Suspensionspolymerisation

1 000 g Ethylmethacrylat wird unter Zusatz von 5 g Lauroylperoxid sowie 4 g 2-Ethylhexylthioglykolat in wäßriger Suspension mit Aluminiumhydroxid als Suspensionsmittel bei 70 Grad C unter Stickstoff als Inertgas polymerisiert. Nach Polymerisationsende wird auf 30 Grad C abgekühlt und das Aluminiumhydroxid mit verdünnter Schwefelsäure aufgelöst. Danach werden die Perlen gewaschen und getrocknet =

Polymer B1)
Ergebnis: Polymerisatperlen mit J = 48 ml/g

Beispiel 9a

Herstellung der Polymeren B1) mit verringertem Molekulargewicht.

979,5 g Ethylacrylat werden mit 20 g Mercaptoethanol und 0,5 g Azoisobutyronitril versetzt und 4 Tage bei 50 Grad C in einem Kunststoffbeutel (® Hostaphan) unter Ausschluß von Luft polymerisiert. Danach wird in Aceton gelöst und in kaltem Petrolether gefällt und bei 70 Grad C im Vakuum getrocknet = Polymeres B1a)
J = 11 ml/g

Beispiel 10

Polymeres B2)

Man verfährt wie in Beispiel 9, wählt jedoch n-Butylmethacrylat als Monomeres.
Ergebnis: Polymerisatperlen mit J = 28 ml/g

Beispiel 11

Polymeres B3)

Man verfährt wie in Beispiel 9, wählt jedoch Isobutylmethacrylat als Monomeres.
Ergebnis: Polymerisatperlen mit J = 36 ml/g

Beispiel 12

Polymeres B4)

Man verfährt wie in Beispiel 9, wählt jedoch n-Propylmethacrylat als Monomeres
Ergebnis: Polymerisatperlen mit J = 42 ml/g

Beispiel 13

Herstellung des Polymeren B5 durch Substanzpolymerisation.

100 g Neopentylmethacrylat werden mit 0,16 g Azoisobutyronitril und 0,32 g Dodecylmercaptan versetzt und in einem Glasgefäß unter Inertgas 4 Stunden bei 60 Grad C polymerisiert. Danach wird in Methanol ausgefällt und bei 70 Grad C im Vacuum getrocknet.
J = 8 ml/g.

Beispiel 14

Herstellung von Poly-n-Hexylmethacrylat als Polymeres B6) durch Substanzpolymerisation

489,75 g Hexylmethacrylat werden mit 10 g Mercaptoethanol und 0,25 g Azoisobutyronitril versetzt und 5 Tage bei 50 Grad C in einem Kunststoffbeutel (® Hostaphan) unter Ausschluß von Luft polymerisiert. Danach wird in Aceton gelöst, in Methanol ausgefällt und bei 70 Grad C im Vacuum getrocknet.
J = 8 ml/g

Beispiel 15

Herstellung von Polybenzylmethacrylat als Vergleichssubstanz.

Man verfährt wie in Beispiel 13, wählt jedoch Benzylmethacrylat als Monomeres.
J = 18 ml/g.

Beispiel 16

Herstellung von Polyisobornylmethacrylat als Vergleichssubstanz.

Man verfährt wie in Beispiel 13, wählt jedoch Isovornylmethacrylat als Monomeres.
J = 2 ml/g.

Beispiel 17

Herstellung von Poly-3,3,5-trimethylcyclohexylmethacrylat als Vergleichssubstanz.

Man verfährt wie in Beispiel 12, wählt jedoch 3,3,5-Trimethylcyclohexylmethacrylat als Monomeres.
J = 6 ml/g.

Beispiel 18

Polymethylmethacrylat als Vergleichssubstanz

Als Polymethylmethacrylat-Vergleichssubstanz wird ein kontinuierlich hergestelltes Copolymerisat aus 96 Gew.-% Methylmethacrylat und 4 Gew.-% Methylacrylat verwendet. Das Molekulargewicht dieser Polymeren ist charakterisiert durch J = 52 ml/g. Als ein solches Polymeres kann ® Plexiglas Y7N der Firma Röhm GmbH verwendet werden.

Abmischversuche zur Beurteilung der Verträglichkeit der Styrol-Acrylat-Copolymeren (Komponente A) mit der Polyalkylmethacrylaten (Komponente B)

Das Styrol-Acrylat-Copolymere wird zu 20 Gew-% in Toluol gelöst. Ebenso wird das Polyalkylmethacrylat (Komponente B) zu 20 Gew.-% Feststoff in Toluol gelöst. Diese Lösungen werden im Verhältnis 5 : 95, 25 : 75, 50 : 50, 75 : 25, 95 : 5, gemischt. Aus den Mischungen werden Filme gegossen und im Vacuum getrocknet. Es resultieren klare, verträgliche Polymerfilme, die zum Teil beim Erwarmen trüb werden (Auftreten einer LCST). In wenigen Fällen treten zunächst trübe Filme auf, die beim Erwärmen klar werden. Besonders interessant sind diejenigen Polymerfilme, die bei jedweder Temperatur klar verträglich sind. Desweiteren von großem Interesse sind Polymerfilme, die bei Raumtemperatur verträglich sind, beim Erwärmen entmischen (LCST). Zur Beurteilung der Polymerverträglichkeit siehe auch Tabellen 1 - 3 sowie Abbildung 1.

TABELLE 1

| Beurteilung der Verträglichkeit verschiedener Styrol-Ethylacrylatcopolymeren (Polymerkomponente A) mit verschiedenen Polymethacrylaten. | | | |
|---|---|---|---|
| Polymethacrylat | Anteil von Styrol (Gew.-%) im Copolymeren A | | |
| | 45 | 62 | 78 |
| Polymethylmethacrylat (J = 52 ml/g) | - | - | - |
| Polyethylmethacrylat (J = 48 ml/g) | + + | + + | LCST |
| Poly-n-butylmethacrylat (J = 38 ml/g) | - | - | - |
| Poly-isobutylmethacrylat | - | - | - |
| + + : verträglich in allen Mischungsverhältnissen im gesamten untersuchten Temperaturbereich (20 Grad C bis 260 Grad C)<br>-: unverträglich in allen Mischungsverhältnissen<br>LCST: verträglich in allen Mischungsverhältnissen bei Raumtemperatur, Entmischung bei hohen Temperaturen. | | | |

TABELLE 2

| Beurteilung der Verträglichkeit verschiedener Styrol-Methylacrylat-Copolymere (A) mit verschiedenen Polymethacrylaten (B) | | | |
|---|---|---|---|
| Polymerkomponente B | Anteil von Styrol (Gew.-%) im Copolymeren A | | |
| | 47 | 64 | 77 |
| Polyethylmethacrylat (J = 48 ml/g) | - | + + | *250 Grad C LCST |
| Poly-n-butylmethacrylat (J = 38 ml/g) | - | - | - |
| Polyisobutylmethacrylat (J = 36 ml/g) | - | - | - |

-: unverträglich in allen Mischungsverhältnissen

+ +: verträglich in allen Mischungsverhältnissen im gesamten interessanten Temperaturbereich (20 bis 260 Grad C)

*250 Grad C LCST: Bei 20 Grad C verträglich in allen Mischungsverhältnissen, beim Erwärmen der Polymerkomponente A/Polymerkomponente B = 1/1-Probe, Entmischung bei 250 Grad C.

TABELLE 3

Beurteilung der Verträglichkeit verschiedener Styrol-Butylacrylatcopolymerer (Polymerkomponente A) mit verschiedenen Polymethacrylaten.

| Polymethacrylat | J ml/g | Anteil von Styrol (Gew.-% im Copolymeren A 40[1]) | 25[2]) |
|---|---|---|---|
| Polyethylmethacrylat | 11 | + (LCST) | ++ |
| Poly-n-propylmethacrylat | 42 | ++ | ++ |
| Poly-n-butylmethacrylat | 38 | + (UCST) | + (UCST) |
| Polyisobutylmethacrylat | 36 | ++ | ++ |
| Poly-n-Hexylmethacrylat | 8 | - | ++ |
| Poly-neopentylmethacrylat | 8 | - | + (LCST) |
| Poly-isobornylmethacrylat | 2 | - | +- |
| Poly-3,3,5-trimethylcyclohexylmethacrylat | - | | +- |
| Poly-benzylmethacrylat | 18 | - | - |

1): kontinuierlich hergestelltes Styrol-Butylacrylat-Copolymeres mit 40 Gew.-% Styrol im Copolymeren, J = 57 ml/g

2): 25 Gew.-% Styrol im Copolymeren, J = 54 ml/g

++: verträglich in allen Mischungsverhältnissen im gesamten untersuchten Temperaturbereich (20 - 260 Grad C)

-: unverträglich in allen Mischungsverhältnissen

+(LCST): Bei 20 Grad C verträglich in allen Mischungsverhältnissen, beim Erwärmen Entmischung (siehe z.B. Abbildung 1)

+(UCST): Bei erhöhter Temperatur (z.B. 200 Grad C) verträglich in allen Mischungsverhältnissen, bei Raumtemperatur 1 : 1-Mischungen unverträglich.

+-: 1:1-Mischungen bei 20 Grad C unverträglich, 5/95 bzw. 95/5-Mischungen bei 20 Grad C verträglich

## Patentansprüche

**1.** Verträgliche Polymermischungen aus zwei unter sich verschiedenen Polymerkomponenten, dadurch gekennzeichnet,

daß die Polymermischung PM besteht aus:

A) 1 bis 99 Gew.-% eines Copolymeren, aufgebaut aus Monomeren

a) 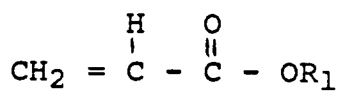 und

b) 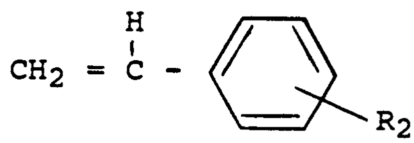

unter Bildung eines Polymerisats der Formel I

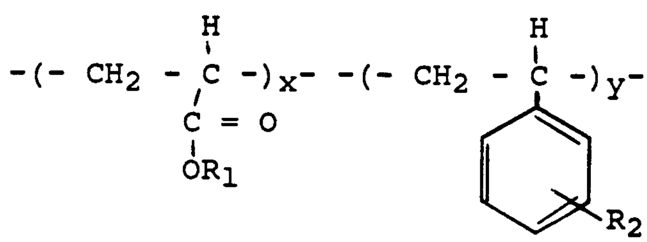 (I)

B) und 99 bis 1 Gew.-% eines Polyalkylmethacrylats aufgebaut aus Monomeren der Formel

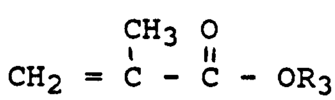 I

mit der Maßgabe, daß:

- $R_1$ für einen aliphatischen Kohlenwasserstoffrest mit 1 bis 4 Kohlenstoffatomen,
- $R_2$ für Wasserstoff oder Methyl,
- $R_3$ für einen nicht-cyclischen aliphatischen Kohlenwasserstoffrest mit 2 bis 8 Kohlenstoffatomen steht,

und worin

- x 10 - 90 Gew.-%,
- y 90 - 10 Gew.-%, bezogen auf das Polymerisat der Formel I ausmacht.

2. Polymermischungen gemäß Anspruch 1, dadurch gekennzeichnet, daß $R_1$ für einen aliphatischen Kohlenwasserstoffrest mit 2 bis 4 Kohlenstoffatomen steht.

3. Polymermischung gemäß Anspruch 1, dadurch gekennzeichnet, daß $R_2$ für Wasserstoff steht.

4. Polymermischung gemäß Anspruch 1, dadurch gekennzeichnet, daß das Polymere B zu mehr als 80 Gew.-% aus dem Monomeren I aufgebaut ist.

5. Polymermischung gemäß den Ansprüchen 1 bis 4, dadurch gekennzeichnet, daß das Polymere A ein Copolymeres aus Butylacrylat und Styrol darstellt.

6. Polymermischung gemäß Anspruch 5, dadurch gekennzeichnet, daß $R_3$ für Isobutyl steht.

7. Polymermischung gemäß Anspruch 5, dadurch gekennzeichnet, daß $R_3$ für n-Propyl steht.

8. Polymermischung gemäß Anspruch 5, dadurch gekennzeichnet, daß $R_3$ für n-Hexyl steht.

9. Polymermischung gemäß Anspruch 5, dadurch gekennzeichnet, daß $R_3$ für Ethyl steht.

10. Polymermischung gemäß Anspruch 5, dadurch gekennzeichnet, daß $R_3$ für n-Butyl steht.

11. Polymermischung gemäß den Ansprüchen 1 und 4, dadurch gekennzeichnet, daß Polymeres A für ein Copolymeres aus Ethylacrylat und Styrol steht.

12. Polymermischung gemäß Anspruch 11 , dadurch gekennzeichnet, daß $R_3$ für Ethyl steht.

13. Polymermischung gemäß den Ansprüchen 1 und 4, dadurch gekennzeichnet, daß Polymeres A für ein Copolymeres aus Methylacrylat und Styrol steht und $R_3$ für Ethyl steht.

## Claims

1. Compatible polymer mixtures of 2 polymer components which are different from each other, characterised in that the polymer mixture PM consists of:
A) 1 to 99 wt.% of a copolymer, synthesized from monomers

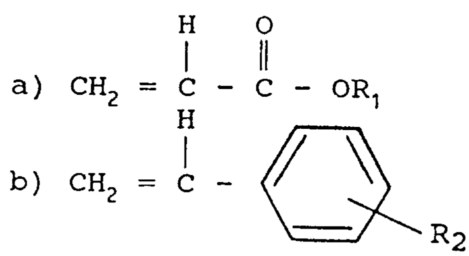

a) and

b)

while forming a polymer of Formula I

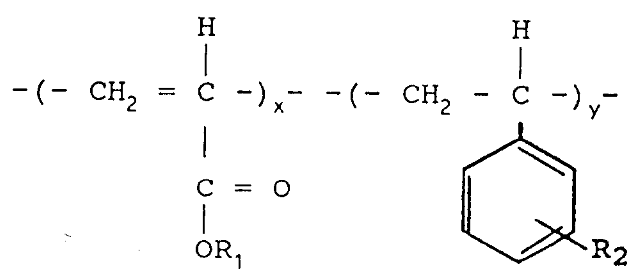

(I)

B) and 99 to 1 wt.% of a polyalkylmethacrylate synthesized from monomerz of Formula

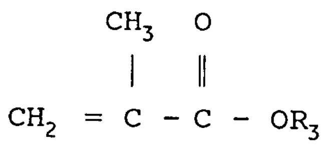

with the proviso that

- $R_1$ is an aliphatic hydrocarbon group having 1 to 4 carbon atoms,
- $R_2$ is hydrogen or methyl,
- $R_3$ is a non-cyclic aliphatic hydrocarbon group having 2 to 8 carbon atoms, and wherein
- x is 10 - 90 wt.%,
- y is 90 - 10 wt.%, based on the polymer of Formula I.

**2.** Polymer mixtures according to claim 1, characterised in that $R_1$ is an aliphatic hydrocarbon group having 2 to 4 carbon atoms.

**3.** A polymer mixture according to claim 1, characterised in that $R_2$ is hydrogen.

**4.** A polymer mixture according to claim 1, characterised in that the Polymer B is synthesized from more than 80 wt.% of Monomer I.

**5.** A polymer mixture according to claims 1 to 4, characterised in that the Polymer A is a copolymer of butylacrylate and styrene.

**6.** A polymer mixture according to claim 5, characterised in that $R_3$ is isobutyl.

**7.** A polymer mixture according to claim 5, characterised in that $R_3$ is n-propyl.

**8.** A polymer mixture according to claim 5, characterised in that $R_3$ is n-hexyl.

**9.** A polymer mixture according to claim 5, characterised in that $R_3$ is ethyl.

**10.** A polymer mixture according to claim 5, characterised in that $R_3$ is n-butyl.

**11.** A polymer mixture according to claims 1 and 4, characterised in that polymer A is a copolymer consisting of ethyl acrylate and styrene.

**12.** A polymer mixture according to claim 11, characterised in that $R_3$ is ethyl.

**13.** A polymer mixture according to claims 1 and 4, characterised in that polymer A is a copolymer consisting of methyl acrylate and ztyrene and $R_3$ is ethyl.

## Revendications

**1.** Mélanges de polymères compatibles, constitués par deux composants polymères différents l'un de l'autre, caractérisés en ce que le mélange de polymères PM se compose de

A) 1 à 99% en poids d'un copolymère composé de monomères

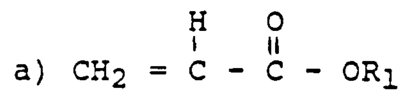

et

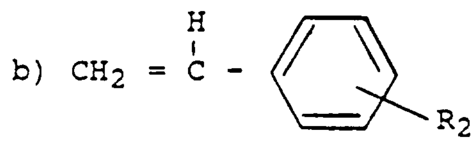

avec formation d'un produit de polymérisation de formule I

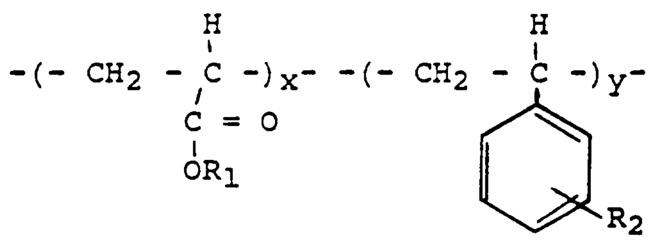

(I)

B) et de 99 a 1% en poids d'un polyméthacrylate d'alkyle composé de monomères de formule

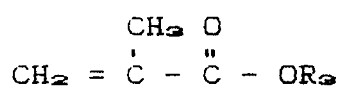

I

étant spécifié que

- $R_1$ est mis pour un reste d'hydrocarbure aromatique à 1-4 atomes de carbone,
- $R^2$ est mis pour un atome d'hydrogène ou un reste méthyle,
- $R_3$ est mis pour un reste d'hydrocarbure aliphatique non cyclique à 2-8 atomes de carbone et où
- x représente 10 à 90% en poids,
- y représente 90 a 10% en poids, par rapport au polymère de formule I.

**2.** Mélanges de polymeres selon la revendication 1, caractérisés en ce que $R_1$ est mis pour un reste d'hydrocarbure aliphatique à 2-4 atomes de carbone.

**3.** Mélange de polyméres selon la revendication 1, caractérisé en ce que $R_2$ est mis pour un atome d'hydrogène.

**4.** Mélange de polymères selon la revendication 1, caractérisé en ce que le polymere B est composé du monomere I pour plus de 80% en poids.

**5.** Mélange de polymeres selon l'une quelconque des revendications 1 à 4, caractérisé en ce que le polymère A est un copolymère d'acrylate de butyle et de styrène.

**6.** Mélange de polymères selon la revendication 5, caractérisé en ce que $R_3$ est mis pour un reste isobutyle.

**7.** Mélange de polymeres selon la revendication 5, caractérisé en ce que $R_3$ est mis pour un reste n-propyle.

**8.** Mélange de polymères selon la revendication 5, caractérisé en ce que $R_3$ est mis pour un reste n-hexyle.

**9.** Mélange de polymères selon la revendication 5, caractérisé en ce que $R_3$ est mis pour un reste éthyle.

**10.** Mélange de polymeres selon la revendication 5, caractérisé en ce que $R_3$ est mis pour un reste n-butyle.

**11.** Mélange de polymères selon les revendications 1 et 4, caractérisé en ce que le polymère A est un copolymère d'acrylate d'éthyle et de styrène.

**12.** Mélange de polymeres selon la revendication 11, caractérisé en ce que $R_3$ est mis pour un reste éthyle.

**13.** Mélange de polymères selon les revendications 1 et 4, caractérisé en ce que le polymère A est un copolymère d'acrylate de méthyle et de styrène et $R_3$ est mis pour un reste éthyle.

ABBILDUNG 1

Phasendiagramm der Mischung A7/B1a. Copolymeres aus 60 Gew.-% Butylacrylat und 40 Gew.-% Styrol (A7) und Polyethylmethacrylat (B1)